(19) Europäisches Patentamt
European Patent Office
Office européen des brevets

(11) **EP 3 705 728 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **20163060.5**

(22) Anmeldetag: **02.07.2018**

(51) Internationale Patentklassifikation (IPC):
**F04D 29/42** *(2006.01)*

(52) Gemeinsame Patentklassifikation (CPC):
**F04D 29/4226; F04D 29/4213; F04D 29/444;**
B60N 2/5621; F04D 29/661; F05D 2250/51

(54) **GEHÄUSE FÜR EINE STRÖMUNGSMASCHINE, INSBESONDERE FÜR EINEN RADIALLÜFTER**

HOUSING FOR A TURBOMACHINE, IN PARTICULAR FOR A RADIAL FAN

BOÎTIER POUR UNE TURBOMACHINE, EN PARTICULIER POUR UN AÉRATEUR RADIAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2017 DE 102017116130**

(43) Veröffentlichungstag der Anmeldung:
**09.09.2020 Patentblatt 2020/37**

(62) Dokumentnummer(n) der früheren Anmeldung(en) nach Art. 76 EPÜ:
**18737572.0 / 3 655 665**

(73) Patentinhaber: **Lear Corporation**
**Southfield, MI 48033 (US)**

(72) Erfinder:
• **Weinzierl, Florian**
**82140 Olching (DE)**
• **Leu, Dumitru-Cristian**
**72108 Rottenburg am Neckar (DE)**
• **Helmenstein, Winfried**
**63571 Gelnhausen (DE)**

(74) Vertreter: **Dr. Solf & Zapf**
**Patent- und Rechtsanwalts PartG mbB**
**Candidplatz 15**
**81543 München (DE)**

(56) Entgegenhaltungen:
EP-A1- 3 561 310    JP-A- 2009 041 517
JP-A- 2010 209 888    JP-A- 2013 057 298
US-A- 6 030 286

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Gehäuse für eine Strömungsmaschine, insbesondere für einen Radiallüfter, gemäß den Oberbegriffen der Patentansprüche 1 und 5.

Gehäuse für Strömungsmaschinen, insbesondere für Radiallüfter, und Radiallüfter selbst sind im Stand der Technik in einer Vielzahl von Ausgestaltungen bekannt. Strömungsmaschinen, insbesondere Radiallüfter, dienen üblicherweise dem Transport von gasförmigen Medien, beispielsweise Luft, durch ein Strömungssystem, indem die Rotation eines Laufrades die Druckverhältnisse im Strömungssystem beeinflusst und einen Volumenstrom hervorruft.

Strömungsmaschinen bzw. Radiallüfter werden oftmals zu Kühlzwecken verwendet. Ein beispielhaftes Einsatzgebiet ist die Belüftung von Automobilsitzen, bei denen im Sitz mindestens eine Strömungsmaschine, insbesondere mindestens ein Radiallüfter angeordnet ist. Die Strömungsmaschine verursacht mindestens einen Volumenstrom, der die Luft im Bereich zwischen einem Passagier und der Sitzoberfläche austauscht, insbesondere von der Sitzoberfläche abführt und/oder auf die Sitzoberfläche zuführt.

Bei derartigen Anwendungsgebieten, bei denen sich Personen im unmittelbaren Umfeld einer arbeitenden Strömungsmaschine aufhalten, steht die Reduzierung der Geräuschemission bei gleichzeitig hoher Lüfterleistung im Vordergrund.

JP 2010-209888 A offenbart einen Radiallüfter mit einer schneckenförmigen Einlassgeometrie und einem Lüfterrad. Auf der Innenseite des Gehäuses im Bereich des Lüfterrades weist das Gehäuse einen Umlaufrücksprung auf. Der Querschnitt des Umlaufrücksprungs verringert sich entgegen dem Uhrzeigersinn kontinuierlich über den Umfang.

JP 2013-57298 offenbart ein Gehäuse mit einem Lüfterrad. Das Lüfterrad ist an einer Einlassöffnung angeordnet. Auf der Innenseite der Einlassöffnung ist ein Umlaufrücksprung vorgesehen.

JP 2009-41517 A offenbart ein Gehäuse mit einem Lüfterrad. Das Lüfterrad ist auf der Innenseite einer Einlassöffnung angeordnet. Das Gehäuse weist einen die Einlassöffnung auf der Innenseite umgebenden Umlaufrücksprung auf.

US 6,030,286 A offenbart einen Radiallüfter mit einem Gehäuse und einem in dem Gehäuse angeordneten Lüfterrad. Das Gehäuse weist eine Einlassöffnung auf, die auf der Innenseite von einem Umlaufrücksprung umgeben ist.

Die aus dem Stand der Technik bekannten Strömungsmaschinen, insbesondere Radiallüfter, weisen dabei den Nachteil auf, dass beispielsweise bei hohen Volumenströmen und/oder Druckniveaus unangenehme Geräuschemissionen für den oder die Passagiere entstehen.

Der vorliegenden Erfindung liegt daher die Aufgabe zu Grunde, ein Gehäuse für eine Strömungsmaschine, insbesondere ein Gehäuse für einen Radiallüfter, bevorzugt für die Verwendung in einem Automobilsitz anzugeben, bei dem die Geräuschemission reduziert ist und gleichzeitig hohe Leistungswerte erreicht werden.

Die vorgenannte Aufgabe ist bei einem gattungsgemäßen Gehäuse für eine Strömungsmaschine gemäß Patentanspruch 1 dadurch gelöst, dass auf einer Innenseite des Gehäuseteils ein die Einlassöffnung zumindest teilweise umfänglich umgebender Umlaufrücksprung ausgebildet ist, und dass der Umlaufrücksprung in mindestens einem ersten Bogensegment auf dem Umfang einen Grundquerschnitt und in mindestens einem zweiten Bogensegment einen variierenden Füllquerschnitt aufweist. Ferner ist die vorgenannte Aufgabe bei einem gattungsgemäßen Gehäuse für eine Strömungsmaschine gemäß Patentanspruch 5 dadurch gelöst, dass ein die Einlassöffnung zumindest teilweise umgebender Umlaufvorsprung ausgebildet ist, und dass der Umlaufvorsprung einen über seine Erstreckung variierenden Querschnitt aufweist. Beispielsweise weist der Umlaufvorsprung einen ausgehend von einem maximalen Querschnitt in beide Umfangrichtungen stetig abnehmenden Querschnitt auf.

Insbesondere ist vorgesehen, dass der Umlaufrücksprung und/oder der Umlaufvorsprung einen über den Umfang zumindest abschnittsweise, bevorzugt mindestens einmal, variierenden Querschnitt aufweist.

Der Umlaufrücksprung und/oder der Umlaufvorsprung ist an der Innenseite des Gehäuseteils ausgebildet, so dass er im Montagezustand ein Teil des Fluidraums ist bzw. im Fall des Umlaufvorsprungs in den Fluidraum hineinragt. Der Querschnitt des Umlaufrücksprungs ist vorzugsweise im Wesentlichen U-förmig. Der Umlaufrücksprung ist als in Bezug auf die Innenseite des Gehäuseteils, insbesondere in einer Richtung parallel zu einer Mittelachse der Einlassöffnung, zumindest teilweise rückspringende Ausnehmung ausgebildet, die sich entlang des Umfangs der Einlassöffnung erstreckt. Der Umlaufvorsprung ist als in Bezug auf die Innenseite des Gehäuseteils, insbesondere in einer Richtung parallel zu einer Mittelachse der Einlassöffnung, zumindest teilweise vorspringende Aufwölbung ausgebildet, die sich entlang des Umfangs der Einlassöffnung erstreckt. Vorzugsweise schließt sich der Umlaufrücksprung und/oder der Umlaufvorsprung in radialer Richtung unmittelbar an die Einlassöffnung an. Beispielsweise ist vorgesehen, dass sich über einen Teil des Umfangs ein Umlaufvorsprung und über einen anderen Teil des Umfangs ein Umlaufrücksprung erstreckt.

Es ist ferner vorgesehen, dass die Einlassöffnung auf einer Außenseite des Gehäuseteils, von einer Aufwölbung umgeben ist, und dass sich die gewölbte Einlassfläche zumindest teilweise auf der Aufwölbung erstreckt. Die Aufwölbung ragt vorzugsweise auf der Außenseite des Gehäuseteils als ein die Einlassöffnung umfänglich umgebender Vorsprung hervor. Die Aufwölbung weist eine Oberfläche auf, die im Querschnitt vorzugsweise einen stetigen Verlauf aufweist.

Vorteilhaft erstreckt sich die konvex gewölbte Einlassfläche zumindest teilweise auf der Aufwölbung, insbesondere in einem Bereich der Aufwölbung, der ein lokales Maximum der Aufwölbung beinhaltet. Vorzugsweise entspricht die Form der Aufwölbung im Querschnitt zu mindestens 75% der Form einer logarithmischen Spirale. Durch die Aufwölbung wird die Einlassöffnung parallel zur Mittelachse der Einlassöffnung erweitert, so dass sich früher eine Grenzschicht ausbilden kann. Die Aufwölbung hat ausgehend von einer Oberfläche der Außenseite des Gehäuses, insbesondere in einer Richtung parallel zu einer Mittelachse der Einlassöffnung, vorzugsweise eine Höhe zwischen 3 mm und 10 mm, insbesondere 6 mm. Durch die Aufwölbung und die Einlassfläche wird folglich im Bereich der Einlassöffnung eine vorteilhafte Oberflächengeometrie ausgebildet, die im Querschnitt die Form einer logarithmischen Spirale, insbesondere einer Fibonacci-Spirale, aufweist.

Insbesondere ist vorgesehen, dass der Umlaufrücksprung innerhalb der Aufwölbung ausgebildet ist, so dass bei nahezu gleichbleibender Wandstärke des Gehäuseteils gleichzeitig eine Aufwölbung und ein Umlaufrücksprung ausgebildet wird. Beispielweise in einer Konfiguration, die nicht von der beanspruchten Erfindung abgedeckt ist, weist der Umlaufrücksprung über den gesamten Umfang einen konstanten Querschnitt auf. Durch den Umlaufrücksprung bzw. den Umlaufvorsprung werden die Strömungseigenschaften des Gehäuseteils im Bereich der Einlassöffnung verbessert, insbesondere bei gleichbleibender Geräuschemission und bei Volumenströmen ab 2,5 Litern pro Sekunde der Druck gesteigert. Der Umlaufrücksprung verhindert vorteilhaft die Rückströmung von Fluid.

Es ist vorgesehen, dass der Umlaufrücksprung und/oder der Umlaufvorsprung einen entlang des Umfangs zumindest abschnittsweise variierenden Querschnitt aufweist. Der Umlaufvorsprung ist insbesondere einstückig mit dem Gehäuseteil ausgebildet.

Es ist vorgesehen, dass der Umlaufrücksprung in mindestens einem ersten Bogensegment auf dem Umfang einen Grundquerschnitt und in mindestens einem zweiten Bogensegment einen variierenden Füllquerschnitt aufweist, insbesondere dass sich der Füllquerschnitt über ein Bogensegment mit einem Mittelpunktswinkel zwischen 1° und 359° erstreckt.

Der Grundquerschnitt ist insbesondere der Querschnitt mit der größten lichten Breite und lichten Höhe des Umlaufrücksprungs auf dem Umfang. Der lichte Querschnitt im Füllquerschnitt ist gegenüber dem Grundquerschnitt reduziert, wobei der Grad der Reduzierung über das Bogensegment des Füllquerschnitts variieren kann. Der Füllquerschnitt ist vorzugsweise auf dem Umfang derart angeordnet, der sich unterhalb der Zunge des Radiallüfters und unterhalb der Auslassöffnung befindet.

Gemäß einer weiteren Ausgestaltung ist zudem vorgesehen, dass der Umlaufrücksprung im Grundquerschnitt eine freie Grundfläche - lichter Querschnitt - aufweist, und dass die freie Grundfläche im Füllquerschnitt zumindest abschnittsweise reduziert ist. Beispielsweise weist der Grundquerschnitt eine Grundhöhe auf, wobei die Grundhöhe im Füllquerschnitt reduziert ist. Die Grundhöhe ist vorzugsweise die Höhe des lichten Querschnitts des Umlaufrücksprungs parallel zur Mittelachse der Einlassöffnung zwischen dem tiefsten Punkt des Umlaufrücksprungs im Querschnitt und dem höchsten Punkt des Umlaufrücksprungs am Übergang zur Begrenzung der Einlassöffnung.

Die Reduzierung der Grundhöhe im Füllquerschnitt kann vorteilhaft als prozentuale Reduzierung in Bezug auf die Grundhöhe im Grundquerschnitt angegeben werden, insbesondere wobei abschnittsweise die Grundhöhe bis auf 0 reduzierbar ist. Insbesondere ist vorgesehen, dass über den Umfang die Grundhöhe an mindestens einer oder mindestens zwei Stellen um 100% reduziert wird, also der Füllquerschnitt einen oder zwei Bereiche mit maximaler Füllung des Umlaufrücksprungs aufweist.

Gemäß einer weiteren Ausgestaltung des Gehäuses hat sich als vorteilhaft herausgestellt, wenn vorgesehen ist, dass sich der Füllquerschnitt in einem Polarkoordinatensystem, das auf der Innenseite des Gehäuseteils anliegt, dessen Pol mit einer Mittelachse der Einlassöffnung zusammenfällt, und dessen Polachse orthogonal zu einer Mittelachse einer Auslassöffnung des Gehäuses ist, in einem Winkelbereich zwischen 120° und 360° erstreckt, insbesondere zwischen 135° und 358°. Der Füllquerschnitt ist folglich in einem Bereich angeordnet, der sich zu einem Anteil im Bereich der Auslassöffnung und zu einem überwiegenden Teil unterhalb der Auslassöffnung angeordnet ist, so dass der Füllquerschnitt im Wesentlichen in dem Bereich des Radiallüfters angeordnet ist, in dem der Druckaufbau erfolgt.

Gemäß einer weiteren Ausgestaltung des Gehäuses ist zudem vorgesehen, dass der Füllquerschnitt, insbesondere in radialer Richtung, ein stetiges oder unstetiges Profil aufweist. Das Profil des Füllquerschnitts ist der Bereich des Übergangs des Umlaufrücksprungs zum Fluidraum im Querschnitt. Insbesondere erstreckt sich das Profil über die Breite - in radialer Richtung - des Umlaufrücksprungs im Querschnitt. Das Profil im Querschnitt ist insbesondere linear, bogenförmig und/oder stufenförmig ausgebildet.

Eine Weiterbildung des Gehäuses sieht vor, dass der Umlaufvorsprung in mindestens einem Vorsprungsbogensegment entlang des Umfangs erstreckt, insbesondere dass das Vorsprungsbogensegment einen Mittelpunktswinkel zwischen 1° und 359°, insbesondere 220°, aufweist. Insbesondere erstreckt sich der Umlaufvorsprung folglich nicht entlang des gesamten Umfangs, sondern nur auf einem Teil des Umfangs, dem Vorsprungsbogensegment. Das Vorsprungsbogensegment hat insbesondere einen Mittelpunktswinkel von etwa 220° und ist im Druckbereich eines Radiallüfters angeordnet.

Das bedeutet gemäß einer weitere Ausgestaltung insbesondere, dass sich das Vorsprungsbogensegment in einem Polarkoordinatensystem, das auf der Innenseite des Gehäuseteils anliegt, dessen Pol mit einer Mittelachse der Einlassöffnung zusammenfällt, und dessen Polachse orthogonal zur Mittelachse einer Auslassöffnung ist, in einem Winkelbereich zwischen 120° und 360° erstreckt, insbesondere in einem Winkelbereich zwischen 135° und 355°.

Insbesondere bei mehrstückigen Ausgestaltungen hat es sich gemäß einer Weiterbildung als vorteilhaft herausgestellt, dass der Umlaufvorsprung zumindest teilweise in das Gehäuseteil eingelassen ist. Bei einer derartigen Ausgestaltung wird der Umlaufvorsprung beispielsweise als separates Teil in eine dafür vorgesehene Ausnehmung an dem Gehäuseteil eingesetzt und an dem Gehäuseteil befestigt. Dadurch lassen sich gleichmäßigere Übergänge zwischen Umlaufvorsprung und Gehäuseteil realisieren.

Eine weitere Ausgestaltung des Gehäuses ist dadurch gekennzeichnet, dass das Gehäuseteil aus einem Kunststoff ausgebildet ist, insbesondere dass das Gehäuseteil einstückig, bevorzugt mittels Spritzgießen oder einem additiven Herstellungsverfahren, insbesondere 3D-Druck, ausgebildet ist.

Das Gehäuse weist mindestens ein erstes Gehäuseteil mit mindestens einer ersten Einlassöffnung auf. Mit dem Gehäuseteil ist mindestens ein Fluidraum zur Aufnahme mindestens eines Lüfterrades zumindest teilweise begrenzbar. Bei dem Gehäuseteil handelt es sich beispielsweise um eine Gehäuseschale eines zweiteiligen Gehäuses. Das Gehäuse bzw. das Gehäuseteil weist insbesondere die für Radiallüfter übliche Spiralform auf. Im Montagezustand wird der Fluidraum folglich von dem ersten Gehäuseteil und dem zweiten Gehäuseteil begrenzt wird und das ist Lüfterrad rotierbar zwischen dem ersten Gehäuseteil und dem zweiten Gehäuseteil gehalten. Alternativ dazu handelt es sich bei dem Gehäuseteil um ein Abdeckelement an einem ein- oder mehrteiligen Gehäuse. Vorzugsweise weist das Gehäuseteil mindestens eines Auslassöffnung auf und/oder begrenzt im Montagezustand zumindest teilweise eine Auslassöffnung des Gehäuses. Im Montagezustand in einem Radiallüfter wird beispielsweise Luft an der Einlassöffnung in den Fluidraum mit dem Lüfterrad eingesaugt und tritt anschließend an der Auslassöffnung wieder aus dem Gehäuse aus.

Bevorzugt ist vorgesehen, dass das Gehäuse für einflutige Radiallüfter ausgebildet ist, also für Radiallüfter mit mindestens einer zentralen Einlassöffnung, wobei die Einlassöffnung im Montagezustand insbesondere so angeordnet ist, dass die Einlassöffnung in einer Ebene liegt, die parallel zur Rotationsebene des Laufrades ist. Alternativ dazu ist vorgesehen, dass das Gehäuse für einen zweiflutigen Radiallüfter ausgebildet ist, also mindestens eine erste Einlassöffnung und mindestens eine zweite Einlassöffnung aufweist. Vorzugsweise sind die erste Einlassöffnung und die zweite Einlassöffnung gegenüberliegend angeordnet, insbesondere identisch ausgebildet. Vorzugsweise ist die Einlassöffnung kreisrund ausgebildet.

Es ist vorgesehen, dass der Umfang der Einlassöffnung nicht lediglich als Materialausnehmung in dem Gehäuseteil ausgebildet ist, sondern der Umfang der Einlassöffnung ist zumindest Abschnittsweise als gewölbte Einlassfläche ausgebildet. Vorzugsweise erstreckt sich die gewölbte Einlassfläche über den gesamten Umfang der Einlassöffnung. Die Einlassöffnung ist folglich im Bereich ihres Umfangs zumindest abschnittsweise konvex in Richtung einer Mittelachse der Einlassöffnung ausgebildet. Insbesondere erstreckt sich die gewölbte Einlassfläche im Querschnitt von einer Außenseite des Gehäuseteils bis zu einer Innenseite des Gehäuseteils.

Die Grenzschicht einer Strömung im Bereich der Einlassöffnung, insbesondere am Umfang der Einlassöffnung, wird vorteilhaft dadurch erweitert, dass die gewölbte Einlassfläche im Querschnitt zumindest teilweise die Form einer logarithmischen Spirale aufweist. Durch die Erweiterung der Grenzschicht werden Wirbelbildung und Totwasserbereiche reduziert, wodurch sich die Geräuschemission reduzieren bzw. bei gleicher Geräuschemission beispielsweise der Druck steigern lässt.

Als Form für die Oberfläche der Einlassfläche im Querschnitt eignet sich jede logarithmische Spirale, bei der sich mit jeder Umdrehung um ihren Mittelpunkt, der hier insbesondere auf einer Kreisbahn um eine Mittelachse der Einlassöffnung liegt, der Abstand zu diesem Mittelpunkt um den gleichen Faktor vergrößert bzw. verkleinert. "Im Querschnitt" bedeutet dabei in einer beliebigen Schnittebene, die eine Mittelachse der Einlassöffnung beinhaltet. Die Form der Einlassfläche im Querschnitt lässt sich mathematisch mit der folgenden Formel in Polarkoordinaten $(r, \varphi)$ beschreiben:

$$r(\varphi) = a \cdot e^{k\varphi}$$

Dabei ist k die konstante Steigung der Spirale, die ungleich null ist. a und k sind Elemente der reellen Zahlen, e ist die Eulersche Zahl.

Der Querschnitt ist vorzugsweise über den gesamten Umfang der Einlassöffnung rotationssymmetrisch um die Mittelachse ausgebildet. Vorzugsweise erstreckt sich ein Abschnitt im Querschnitt, der die Form einer logarithmischen Spirale aufweist, von der Außenseite des Gehäuseteils bis zur Innenseite des Gehäuseteils. Bevorzugt weist der Abschnitt mindestens zwei unterschiedliche Radien auf.

Als besonders vorteilhaft hat sich herausgestellt, wenn vorgesehen ist, dass die logarithmische Spirale eine Fibonacci-Spirale ist, insbesondere dass der der logarithmischen Spirale entsprechende Querschnitt - zumindest ein Abschnitt der Einlauffläche im Querschnitt - mindestens zwei unterschiedliche Krümmungsradien aufweist. Insbesondere mit mindestens zwei Krümmungsradien, die sich mit einem Faktor von etwa 1,618034 zueinander verhalten. Die gewölbte Einlassfläche entspricht im Querschnitt vorzugsweise zumindest einem Teil einer Fibonacci-Spirale, insbesondere mit einem überstrichenen Mittelpunktswinkel für die Spirale von mehr als 90°. Mathematisch lässt sich die Form der Einlassfläche in Polarkoordinaten wie folgt beschreiben:

$$r(\varphi) \ = \ a \ \cdot \ e^{k\varphi}$$

Dabei ist die Steigung

$$k = \frac{2 \cdot \ln(\Phi)}{\pi}$$

und

$$\Phi = \frac{\sqrt{5} + 1}{2}$$

Die Form der Fibonacci-Spirale verhindert vorteilhaft eine Strömungsablösung im Bereich der gewölbten Einlassfläche, so dass die Geräuschemission durch das durch die Einlassöffnung in den Fluidraum in Richtung des Laufrades einströmenden Fluides reduziert wird.

Die Stabilität des Gehäuseteils lässt sich vorteilhaft gemäß einer weiteren Ausgestaltung dadurch steigern, dass die Aufwölbung zumindest teilweise von einer Stützstruktur umgeben ist. Vorzugsweise ist die Aufwölbung vollständig von einer Stützstruktur umgeben. Die Stützstruktur erstreckt sich auf der Außenseite des Gehäuseteils und steigert dessen Stabilität. Vorzugsweise ist die Stützstruktur wabenförmig ausgebildet, so dass die Einlassöffnung von einer Mehrzahl von wabenförmigen Abschnitten umgeben ist. Die wabenförmige Stützstruktur erstreckt sich insbesondere parallel zur Mittelachse der Einlassöffnung.

Bevorzugt ist die Höhe der Stützstruktur - in einer Richtung parallel zur Mittelachse der Einlassöffnung - gleich der maximalen Höhe der Aufwölbung in dieser Richtung, so dass die Aufwölbung und die Stützstruktur flächenbündig abschließen.

Insbesondere die sich ausbildende Grenzschicht der Strömung lässt sich gemäß einer weiteren Ausgestaltung insbesondere dadurch weiter vergrößern, dass die gewölbte Einlassfläche auf der Innenseite des Gehäuseteils an dem Gehäuseteil hervorragt. Die Einlassfläche ist auf der Innenseite des Gehäuseteils im Querschnitt folglich derart verlängert ausgebildet, dass sie auf der Innenseite einen Vorsprung bildet. Im Montagezustand erstreckt sich die gewölbte Einlassfläche umfänglich folglich zumindest teilweise in den von dem Gehäuseteil begrenzten Fluidraum hinein.

Gemäß einer weiteren Ausgestaltung des Gehäuses ist vorgesehen, dass die Einlassfläche mindestens einen lokalen Leitvorsprung aufweist, insbesondere dass sich der lokale Leitvorsprung in einer Ebene, die eine Mittelachse der Einlassöffnung beinhaltet, erstreckt. Vorzugsweise ist eine Mehrzahl von Leitvorsprüngen auf der Einlassfläche angeordnet, die das Ausbilden von Strömungsanteilen in Umfangsrichtung reduzieren.

Eine weitere Ausgestaltung des Gehäuses sieht zudem vor, dass die Einlassfläche mindestens eine sich über einen Teil des Umfangs der Einlassöffnung erstreckende Ausnehmung aufweist. Die Ausnehmung ist vorzugsweise so ausgebildet, dass sie die Höhe der Aufwölbung lokal reduziert und/oder den lichten Querschnitt der Einlassöffnung lokal vergrößert. Durch die Ausnehmung wird die Geräuschemission zusätzlich reduziert.

Eine weitere Ausgestaltung sieht vor, dass sich mindestens ein Leitelement ausgehend von der Einlassfläche in Richtung einer Mittelachse der Einlassöffnung erstreckt. Das Leitelement ist derart ausgebildet, dass es die Strömung des eintretenden Fluids in einer vorbestimmten Weise beeinflusst, beispielsweise deren Richtung. Das Leitelement ist zur Strömungsbeeinflussung ausgebildet und eingerichtet. Das Leitelement erstreckt sich ausgehend von der Einlassfläche in Richtung der Mittelachse der Einlassöffnung und stützt sich beispielsweise mit einem Stützelement an der Einlassfläche, insbesondere an der gegenüberliegenden Seite auf dem Umfang, ab. Es ist auch vorgesehen, dass sich das Leitelement über die Mittelachse hinaus bis zur gegenüberliegenden Seite erstreckt. Bei diesem Ausführungsbeispiel könnte man auch von zwei Leitelementen sprechen, die sich jeweils in Richtung der Mittelachse erstrecken und sich an der Mittelachse treffen und gegenseitig abstützen.

Eine Weiterbildung des Gehäuses sieht vor, dass ein die Einlassöffnung zumindest teilweise überdeckender Einlassring mit dem Leitelement, bevorzugt mit zwei Leitelementen, an dem Gehäuseteil gehalten ist. Die durch die Einlassöffnung in eintretende Strömung wird dabei sowohl durch den Einlassring als auch durch das Leitelement beeinflusst. Das Leitelement erstreckt sich in radialer Richtung zwischen der Einlassfläche und dem Einlassring. Der größte Durchmesser des Einlassrings ist vorzugsweise kleiner oder gleich dem kleinsten Durchmesser der Einlassöffnung. Beispielsweise sind zwei Leitelemente auf dem Umfang gegenüberliegend oder versetzt zueinander angeordnet.

Als besonders vorteilhaft hat sich gemäß einer Weiterbildung herausgestellt, wenn mindestens ein Leitelement, vorzugsweise alle Leitelemente, mindestens eine Leitfläche mit einer mindestens zweidimensionalen Erstreckung aufweisen. Die Leitfläche dient der Umlenkung der Strömung, insbesondere der Richtungsänderung. Beispielweise weist ein Leitelement zwei Leitflächen auf, die vorzugsweise gegenüberliegend - gegenüberliegende Flächen des Leitelements - angeordnet sind. Insbesondere ist die mindestens eine Leitfläche gewölbt, vorzugsweise sind beide Leitflächen gewölbt. Beispielsweise entspricht die Wölbung der Form einer logarithmischen Spirale, bevorzugt einer Fibonacci-Spirale mit mindestens zwei unterschiedlichen Krümmungsradien. Vorteilhaft ist ferner vorgesehen, dass die Leitfläche gegenüber einer Mittelachse der Einlassöffnung in Umfangsrichtung geneigt ist. Das Bedeutet, dass die Leitfläche so angeordnet ist, dass eine Strömung zumindest teilweise in eine Tangential-und/oder Umfangsrichtung einer Kreisbahn um die Mittelachse umgelenkt wird.

Gemäß einer weiteren Ausgestaltung des Gehäuses ist bevorzugt vorgesehen, dass mehr als zwei Leitelemente, insbesondere zwischen fünf und zehn Leitelemente vorgesehen sind, bevorzugt dass die Leitelemente gleichmäßig oder asymmetrisch auf dem Umfang der Einlassfläche angeordnet sind. Bei einer gleichmäßigen Anordnung ist der Abstand auf dem Umfang - insbesondere der Mittelpunktswinkel - zwischen allen Leitelementen identisch.

Die Leitelemente erhöhen beispielsweise bei gleichbleibendem Volumenstrom und gleichbleibender Geräuschemission den von einem Radiallüfter mit einem derartigen Gehäuse erzeugbaren Druck. Das Leitelement bzw. die Leitelemente erfüllen gleichzeitig die Funktion eines Abdeckgitters für die Einlassöffnung und verhindern ein Eindringen von Feststoffen bestimmter Größe.

Bei einer asymmetrischen Anordnung variiert der Abstand - der Mittelpunktswinkel - zwischen den Leitelementen auf dem Umfang. In einem Polarkoordinatensystem, das auf der Außenseite des Gehäuseteils anliegt, dessen Pol mit einer Mittelachse der Einlassöffnung zusammenfällt und dessen Polachse orthogonal zur Mittelachse einer Auslassöffnung ist, sind die Leitelemente in einem Winkelbereich zwischen 90° und 250°, insbesondere 90° und 180° -dem Druckbereich -, näher zueinander angeordnet - die Mittelpunktswinkel zwischen den Leitelementen sind kleiner -, als in einem Winkelbereich zwischen 250° und 360°. Bei ungleichmäßiger Beabstandung der Leitelemente zueinander lässt sich vorteilhaft die wahrnehmbare Geräuschemission weiter reduzieren.

Ganz besonders vorteilhaft ist gemäß einer Weiterbildung vorgesehen, dass zumindest ein Teil der Leitelemente auf dem Umfang der Einlassfläche mit sich zueinander nach der Fibonacci-Folge verhaltenden Abständen - Mittelpunktswinkeln - beabstandet ist. Aufgrund zu geringer Abstände werden beispielsweise die ersten Elemente der Fibonacci-Folge nicht berücksichtigt, so dass vorzugsweise der erste Abstand bzw. Mittelpunktswinkel zwischen einem ersten und einem zweiten Leitelement dem siebten Element der Fibonacci-Folge, also der Zahl 13 entspricht, folglich der erste Mittelpunktswinkel 13° beträgt. Alle darauffolgenden Leitelemente auf dem Umfang sind so beabstandet, dass der Abstand - der Mittelpunktswinkel - jeweils aus der Summe der beiden vorausgehenden Abstände gebildet ist.

Insbesondere beginnt der Abstand zwischen einem ersten und einem zweiten Leitelement mit einem Mittelpunktswinkel von 13°, so dass zwischen dem zweiten und dritten Leitelement ein Mittelpunktswinkel von 21° (13°+8°) folgt. Die darauffolgenden Mittelpunktswinkel ergeben sich ebenfalls stets aus der Summe der beiden vorangehenden Mittelpunktswinkel.

Insbesondere ist vorgesehen, dass die Leitfläche auf dem Umfang in dem Bereich am nächsten zueinander beabstandet sind, in dem sich auf der Innenseite des Gehäuseteils, im Fluidraum, der Druckbereich befindet, insbesondere in dem vorstehend beschriebenen Winkelbereich zwischen 90° und 180° im Polarkoordinatensystem. Das ist der Bereich, der unterhalb der Zunge des Radiallüfters angeordnet ist.

Der erreichbare Druck bei gleichbleibender Geräuschemission lässt sich vorteilhaft weiter dadurch steigern, dass gemäß einer weiteren Ausgestaltung vorgesehen ist, dass der Einlassring eine in Richtung des Umfangs der Einlassöffnung orientierte Oberfläche mit einem Querschnitt aufweist, der zumindest teilweise die Form einer logarithmischen Spirale, insbesondere einer Fibonacci-Spirale, aufweist und/oder dass der Einlassring eine von dem Umfang der Einlassöffnung abgewandte Oberfläche mit einem Querschnitt aufweist, der zumindest teilweise der Form einer logarithmischen Spirale, insbesondere einer Fibonacci-Spirale, aufweist. Dadurch legt sich die Strömung im Bereich der Einlassöffnung mit einer vorteilhaften Grenzschicht an den Einlassring an. Bei den Oberflächen des Einlassrings handelt es sich um die Oberflächen, die im Wesentlichen wie die Einlassfläche ausgerichtet sind.

Vorzugsweise sind sowohl die - im Querschnitt - innenliegende Oberfläche als auch die - im Querschnitt - außenliegende Oberfläche des Einlassrings nahezu vollständig so ausgebildet, dass sie die Form einer Fibonacci-Spirale, insbesondere mit mindestens zwei unterschiedlichen Radien, aufweisen.

Besonders vorteilhafte Ergebnisse lassen sich erzielen, wenn die Ausführungsbeispiele der vorbeschriebenen erfindungsgemäßen Lösung mit der unmittelbar voranstehend beschriebenen, erfindungsgemäßen Lösung kombiniert wird, also beispielsweise ein Einlassring mit Leitelementen mit einer in ihrer Form gemäß einer logarithmischen Spirale gewölbten Einlassfläche kombiniert wird.

Als besonders vorteilhaft hat sich ferner herausgestellt, die Merkmale der vorgenannten Lösungen untereinander zu kombinieren, so dass die besten Ergebnisse beispielsweise mit einem Gehäuse erzielt werden, bei dem die Einlauffläche die Form einer Fibonacci-Spirale aufweist, der Einlassring ebenfalls mit Fibonacci-Oberflächen ausgebildet ist und auf der Innenseite ein Umlaufrücksprung mit Füllquerschnitt vorhanden ist. Ein erstes Gehäuseteil kann vorteilhaft mit einem bekannten zweiten Gehäuseteil zu einem erfindungsgemäßen Gehäuse zusammengefügt werden.

Vorzugsweise wird das Gehäuse für einen Radiallüfter, mit mindestens einem Lüfterrad eingesetzt, wobei das Lüfterrad von einem Antriebsmittel antreibbar ist, und wobei das Lüfterrad rotierbar in dem Gehäuse angeordnet ist. Besonders bevorzugt eignet sich ein Radiallüfter mit einem derartigen Gehäuse zur Klimatisierung eines Fahrzeugsitzes.

Im Einzelnen gibt es nun eine Vielzahl von Möglichkeiten das Gehäuse auszugestalten und weiterzubilden. Dazu wird verwiesen sowohl auf die den Patentansprüchen 1 und 5 nachgeordneten Patentansprüche als auch auf die nachfolgende Beschreibung von bevorzugten Ausführungsbeispielen in Verbindung mit der Zeichnung.

In der Zeichnung zeigen:

Fig. 1          einen Radiallüfter mit einem Ausführungsbeispiel eines Gehäuses;

Fig. 2          einen Schnitt durch das Ausführungsbeispiel gemäß Fig. 1;

Fig. 3          ein Ausführungsbeispiel eines Gehäuseteils;

Fig. 4          ein Radiallüfter mit einem Ausführungsbeispiel eines Gehäuses;

Fig. 5          ein Ausführungsbeispiel eines Gehäuses;

Fig. 6          einen Schnitt durch ein weiteres Ausführungsbeispiel eines Gehäuses;

Fig. 7          ein Ausführungsbeispiel eines Gehäuses;

Fig. 8          das Ausführungsbeispiel gemäß Fig. 7 in einer anderen Ansicht;

Fig. 9a bis g   Ausführungsbeispiele von Füllquerschnitten,

Fig. 10a bis h  Ausführungsbeispiele von umfänglichen Verläufen des Füllquerschnitts,

Fig. 11         ein Radiallüfter mit einem Ausführungsbeispiel eines Gehäuses,

Fig. 12         ein Ausführungsbeispiel eines Gehäuseteils,

Fig. 13         das Gehäuseteil gemäß Fig. 12,

Fig. 14a bis h  Ausführungsbeispiele von Querschnitten des Umlaufvorsprungs, und

Fig. 15a bis h  Ausführungsbeispiele von umfänglichen Verläufen des Umlaufvorsprungs.

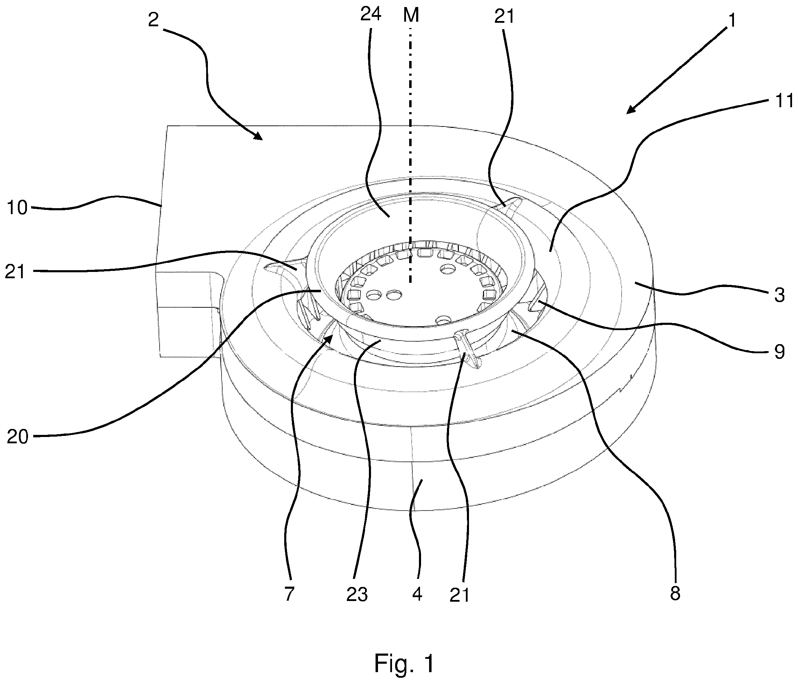

Fig. 1 zeigt ein Ausführungsbeispiel eines Gehäuses 1 für einen dargestellten Radiallüfter 2. Das Gehäuse 1 umfasst bei diesem Ausführungsbeispiel ein erstes Gehäuseteil 3 sowie ein zweites Gehäuseteil 4. Das erste Gehäuseteil 3 und das zweite Gehäuseteil 4 sind miteinander verbunden. Das Gehäuseteil 3 weist eine Einlassöffnung 7 auf, durch die ein Fluid, beispielsweise Luft, in einen Fluidraum 8, in dem ein Lüfterrad 9 rotierbar gehalten ist, einströmen kann. Das Gehäuse 1 weist ferner eine Auslassöffnung 10 auf, durch die das Fluid den Radiallüfter 2 mit einem höheren Druck wieder verlässt. Die Einlassöffnung 7 weist an ihrem Umfang eine gewölbte Einlassfläche 11 auf, die bei diesem Ausführungsbeispiel konvex in Richtung der Mittelachse M der Einlassöffnung 7 gewölbt ist.

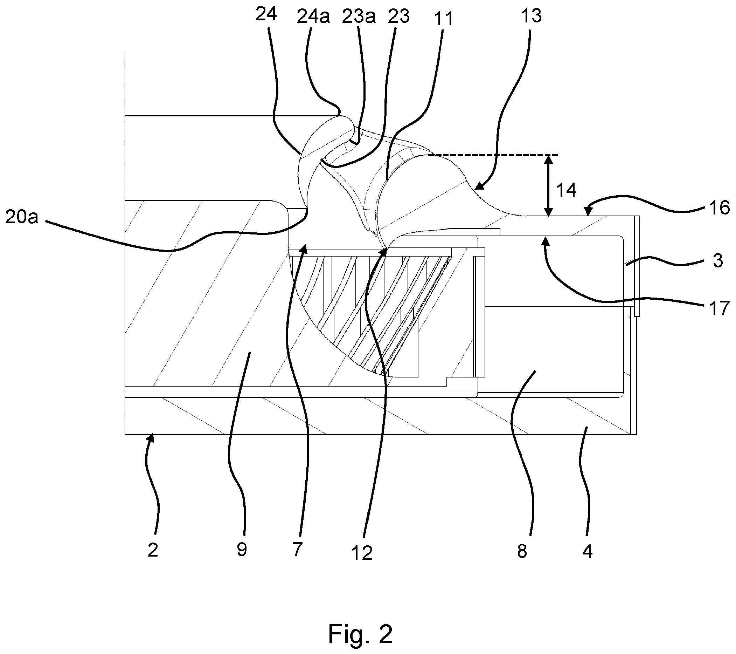

Fig. 2 zeigt einen Schnitt durch das Ausführungsbeispiel gemäß Fig. 1 in einer Ebene, die die Mittelachse M der Einlassöffnung 7 vollständig beinhaltet. Das Lüfterrad 9 ist innerhalb des Fluidraums 8 rotierbar zwischen dem ersten Gehäuseteil 3 und dem zweiten Gehäuseteil 4 gehalten. Die gewölbte Einlassfläche 11, die die Einlassöffnung 7 vollumfänglich umgibt, ist in einem Abschnitt zwischen einem Ende 12 der Einlassfläche 11 innerhalb des Fluidraums 8 und etwa der Hälfte 13, einer Höhe 14, einer Aufwölbung 15 als Fibonacci-Spirale mit drei unterschiedlichen Krümmungsradien ausgebildet. Die Einlassfläche 11 erstreckt sich teilweise auf der Aufwölbung 15.

Die Aufwölbung 15 umgibt die Einlassöffnung 7 entlang des gesamten Umfangs und tritt in einer Richtung parallel zur Mittelachse M (siehe Fig. 1) aus einer Außenseite 16 des Gehäuseteils 3 hervor. Die Aufwölbung 15 weist im Querschnitt über ihre gesamte Erstreckung einen stetigen Verlauf auf, insbesondere einschließlich der Einlassfläche 11. Auf einer Innenseite 17 des Gehäuseteils 3 ragt die gewölbte Einlassfläche 11 mit ihrem Ende 12 ebenfalls hervor.

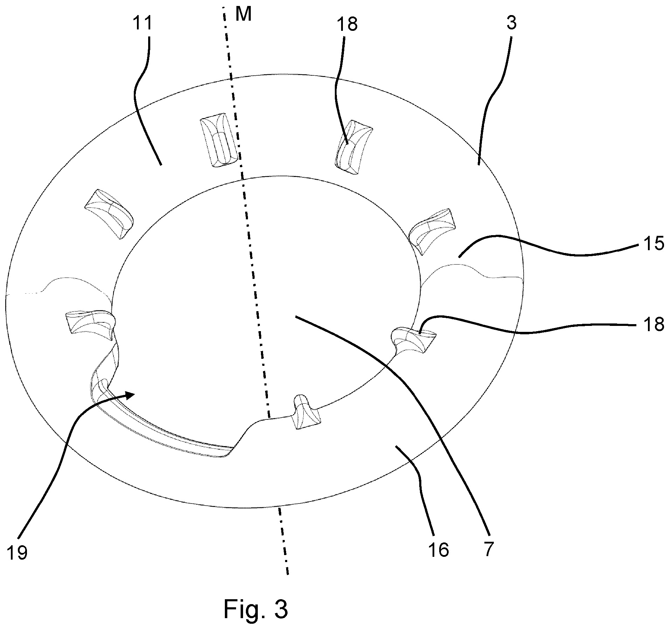

Fig. 3 zeigt ein Ausführungsbeispiel eines Gehäuseteils 3 in perspektivischer Ansicht. Das Gehäuseteil 3 ist als Abdeckring eines Gehäuses 1 ausgebildet. Die Einlassöffnung 7 weist eine gewölbte Einlassfläche 11 auf, die sich zumindest teilweise auf einer Aufwölbung 15 erstreckt. Die Aufwölbung 15 ragt aus der Außenseite 16 in einer Richtung parallel zur Mittelachse M hervor. In der Einlassfläche 11 sind eine Mehrzahl von Leitvorsprüngen 18 angeordnet, wobei sich die Leitvorsprünge 18 sich jeweils im Wesentlichen in einer Ebene erstrecken, die die Mittelachse M der Einlassöffnung 7 beinhaltet, also nicht zur Mittelachse M geneigt sind. Insbesondere die durch den Radiallüfter 2 entstehenden Geräusche werden durch eine Ausnehmung 19 in der Aufwölbung 15 bzw. in der Einlassfläche 11 weiter reduziert. Die Ausnehmung 19 erstreckt sich über einen Teil des Umfangs.

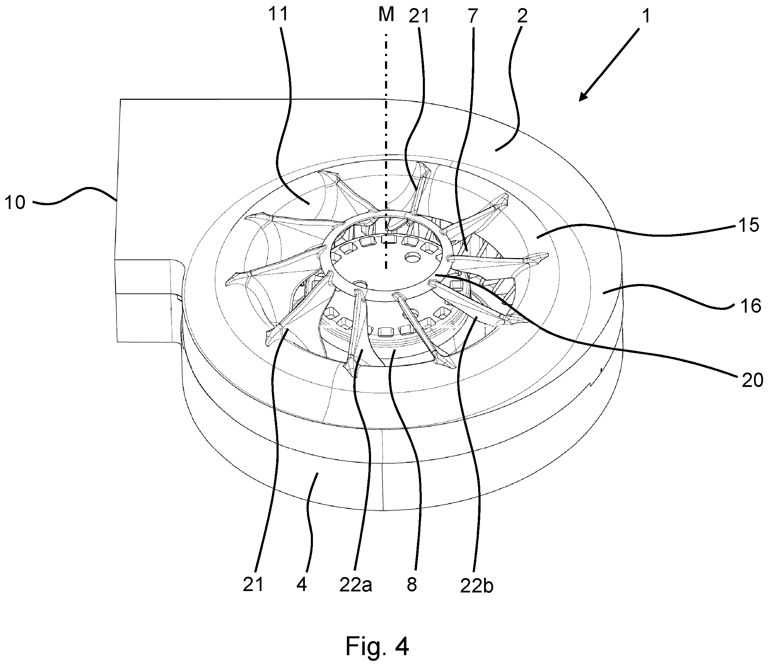

Fig. 4 zeigt einen Radiallüfter 2 mit einem Ausführungsbeispiel eines Gehäuses 1 in perspektivischer Ansicht. Bei diesem Ausführungsbeispiel weist das Gehäuseteil 3 ein die Einlassöffnung 7 zumindest teilweise überdeckenden Einlassring 20 auf. Das Ausführungsbeispiel in Fig. 1 zeigt ebenfalls einen Einlassring 20. Der Einlassring 20 wird gemäß Fig. 4 von zehn Leitelementen 21 an dem Gehäuseteil 3 und gemäß Fig. 1 von drei Leitelementen 21 an dem Gehäuseteil 3 gehalten. Die Leitelemente 21 weisen eine erste Leitfläche 22a sowie eine zweite Leitfläche 22b mit einer mindestens zweidimensionalen Erstreckung auf. Gemäß Fig. 4 sind die Leitflächen 22a und 22b gegenüber der Mittelachse M geneigt. Gemäß Fig. 1 und Fig. 4 sind die Leitelemente auf dem die Einlassöffnung 7 umgebenden Umfang gleichmäßig verteilt und zueinander beabstandet. Die Leitelemente 21 sind an der Einlassfläche 11 angeordnet und erstrecken sich in radialer Richtung in Richtung des Einlassrings 20.

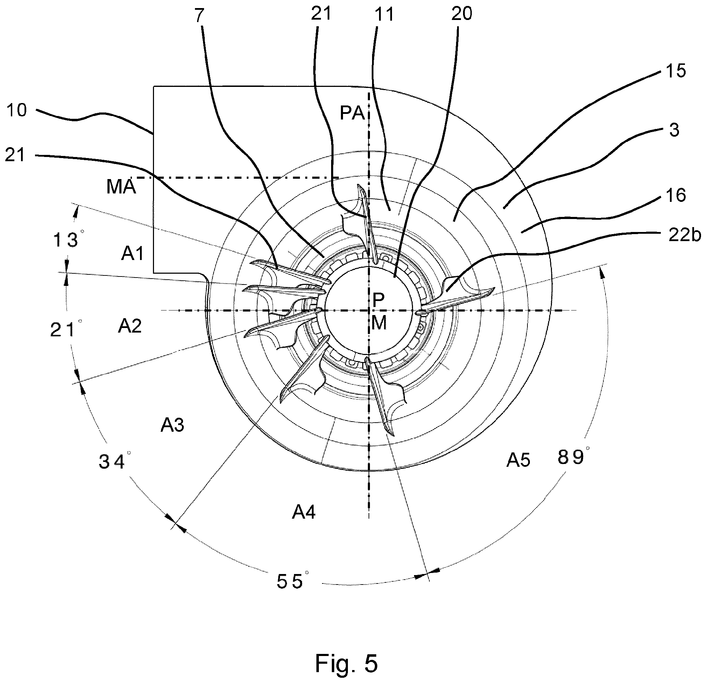

Fig. 5 zeigt ein Ausführungsbeispiel eines Gehäuses 1 von der Außenseite 16. Das Gehäuse 1 weist einen Einlassring 20 auf, der von sieben Leitelementen 21 die Einlassöffnung 7 teilweise überdeckend an dem Gehäuseteil 3 gehalten ist. Ein Teil der Leitelemente 21 ist auf dem Umfang der Einlassöffnung 7 bzw. der Einlassfläche 11 derart zueinander beabstandet, dass sich die Abstände A1 bis A5 - die Mittelpunktswinkel - gemäß der Fibonacci-Folge zueinander verhalten. Das bedeutet, dass ausgehend von einem ersten Abstand A1, dem ein Mittelpunktswinkel von 13° - als siebtes Element der Fibonacci-Folge - zugrunde liegt, und einem Abstand A2, dem ein Mittelpunktswinkel von 21° - als Summe von 8° und 13° - zugrunde liegt, nachfolgend die Abstände stets der Summe der beiden vorangehenden Abstände bzw. Mittelpunktswinkeln entsprechen. Folglich ist der Mittelpunktswinkel des Abstands A3 die Summe der Mittelpunktswinkel von A1 und A2 sowie der Mittelpunktswinkel von A4 die Summe der Mittelpunktswinkel von A2 und A3 bzw. der Mittelpunktswinkel von A5 die Summe der Mittelpunktswinkel von A3 und A4. Durch die dargestellte ungleichmäßige Verteilung der Leitelemente 21 auf dem Umfang kann der Druck bei gleicher Geräuschentwicklung, insbesondere bei Volumenströmen zwischen zwei und vier Liter pro Sekunde gesteigert werden.

Gemäß Fig. 5 sind in einem Polarkoordinatensystem, das auf der Außenseite 16 des Gehäuseteils 3 anliegt, dessen Pol P mit der Mittelachse M der Einlassöffnung 7 zusammenfällt, und dessen Polachse PA orthogonal zur Mittelachse MA der Auslassöffnung 10 ist, ist das erste Leitelement 21 mit dem Abstand A1 zum zweiten Leitelement 21 etwa bei einem Winkel von 90° angeordnet.

Gemäß dem Ausführungsbeispiel der Fig. 1 und Fig. 2 weist der Einlassring 20 eine in Richtung der Einlassfläche 11 orientierte Oberfläche 23 auf, die im in Fig. 2 dargestellten Querschnitt teilweise, insbesondere nämlich zwischen einem Ende 20a und einem Abschnittsende 23a vor Änderung des Vorzeichens der Krümmung der Fläche im Querschnitt die Form einer Fibonacci-Spirale aufweist. Ferner weist auch eine von der Einlassfläche 11 abgewandte Oberfläche 24 des Einlassrings 20 im Querschnitt teilweise, insbesondere nämlich zwischen dem Ende 20a und einem Abschnittsende 24a im Übergang in die Stirnfläche des Einlassrings, die Form einer Fibonacci-Spirale, insbesondere mit mindestens zwei unterschiedlichen Radien auf. Durch eine derartige Gestaltung des Einlassrings 20 kann bei gleichbleibender Geräuschentwicklung bei nahezu allen Volumenströmen der Druck des Radiallüfters 2 gesteigert werden.

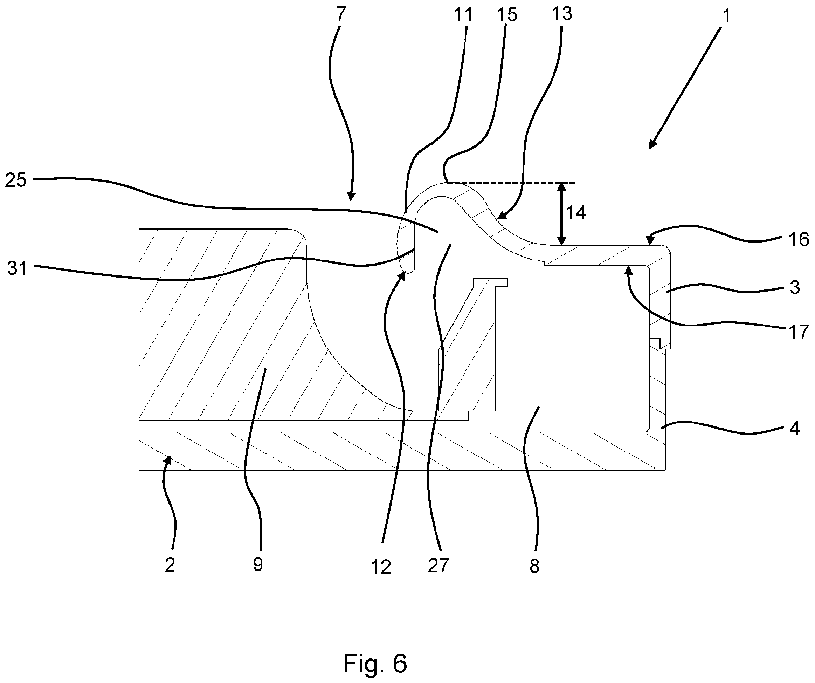

Fig. 6 zeigt ein Ausführungsbeispiel eines Gehäuses 1 für einen dargestellten Radiallüfter 2. Das Lüfterrad 9 ist rotierbar innerhalb des Fluidraums 8 zwischen dem ersten Gehäuseteil 3 und einem zweiten Gehäuseteil 4 gehalten. An der Innenseite 17 des Gehäuseteils 3 ist auf der gegenüberliegenden Seite der Aufwölbung 15 ein die Einlassöffnung 7 vollumfänglich umgebener Umlaufrücksprung 25 ausgebildet. Der Umlaufrücksprung 25 ist im dargestellten Schnitt so ausgebildet, dass die Wandstärke im Bereich der Einlassfläche 11 sowie der Aufwölbung 15 nahezu konstant ist. Durch den Umlaufrücksprung 25 kann bei gleichbleibender Geräuschentwicklung insbesondere bei Volumenströmen von mehr als zwei Liter pro Sekunde der Druck gegenüber Ausführungsbeispielen ohne Umlaufrücksprung 25 gesteigert werden. Eine Innenflanke 31 des Umlaufrücksprungs 25 ist bei diesem Ausführungsbeispiel parallel zur Mittelachse M der Einlassöffnung 7 ausgebildet.

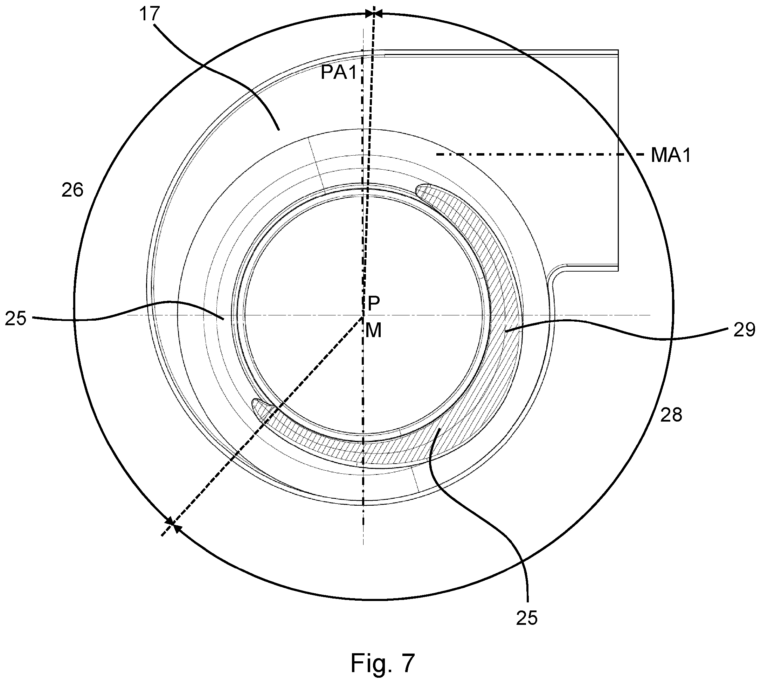

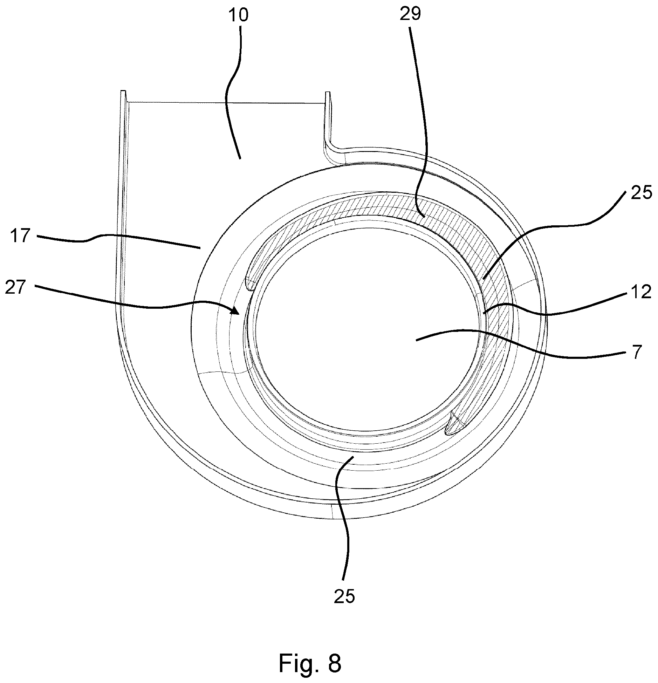

Fig. 7 und Fig. 8 zeigt ein Ausführungsbeispiel eines Gehäuseteils 3 von der Innenseite 17. Fig. 8 zeigt das Ausführungsbeispiel in einer perspektivischen Ansicht. Der Umlaufrücksprung 25 erstreckt sich über den gesamten Umfang der Einlassöffnung 7. In einem ersten Bogensegment 26 entlang des Umfangs hat der Umlaufrücksprung 25 einen Grundquerschnitt 27, der beispielsweise in Fig. 6 dargestellt ist. In einem zweiten Bogensegment 28 weist der Umlaufrücksprung 25 einen Füllquerschnitt 29 auf, dessen Querschnitt vom Grundquerschnitt 27 abweicht und variiert. Im dargestellten Ausführungsbeispiel erstreckt sich der Füllquerschnitt 29 über ein zweites Bogensegment 28 mit einem Mittelpunktswinkel von etwa 220°. In einem Polarkoordinatensystem, das auf der Innenseite 17 des Gehäuseteils 3 ausgerichtet ist, dessen Pol P mit der Mittelachse M der Einlassöffnung 7 zusammenfällt, und dessen Polachse PA1 orthogonal zu einer Mittelachse MA1 der Auslassöffnung 10 des Gehäuses 1 ist, ist der dargestellte Füllquerschnitt 29 - mit seiner Mittelpunktswinkelsumme von 220° - in einem Winkelbereich zwischen 138° und 358° angeordnet. Der Füllquerschnitt 29 ist in Fig. 8a nur als Gründen der Anschaulichkeit gestrichelt dargestellt, es handelt sich nicht um einen Schnitt.

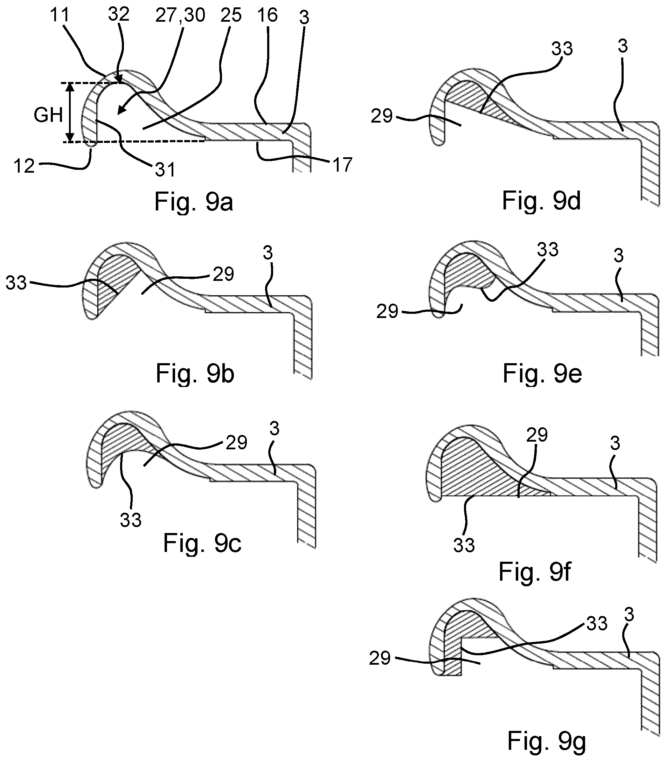

Fig. 9a bis Fig. 9g zeigen Ausführungsbeispiele des Grundquerschnitts 27 und des Füllquerschnitts 29 des Umlaufrücksprungs 25. Der gegenüber dem Grundquerschnitt 27 reduzierte Querschnitt ist in den Fig. 9b bis Fig. 9g nur aus Gründen der vereinfachten Darstellung schraffiert dargestellt; es handelt nicht um ein anderes Material. Fig. 9a zeigt den Umlaufrücksprung 25 mit einem Grundquerschnitt 27, der im Querschnitt eine freie Grundfläche 30 mit einer Grundhöhe GH aufweist, die an der Innenflanke 31 zwischen einer gedachten Ebene an der Innenseite 17 und dem davon entlang der Mittelachse M bzw. der Innenflanke 31 am weitest entfernten Punkt 30 im Grundquerschnitt 27 gemessen wird.

Fig. 9b bis Fig. 9g zeigen Ausführungsbeispiele des Füllquerschnitts 29 mit unterschiedlichen Profilen 33 im Grundbereich über die Breite des Umlaufrücksprungs 25. Die Profile 33 haben, insbesondere in radialer Richtung ausgehend von der Mittelachse M, im Querschnitt entweder einen stetigen, bogenförmigen Verlauf (Fig. 9c, 9e), einen linearen Verlauf (Fig. 9b, 9d, 9f) oder einen stufenförmigen Verlauf (Fig. 9g). Fig. 9b bis Fig. 9g zeigen jeweils einen Schnitt im Bereich der maximalen Reduzierung der freien Grundfläche 30. Ausgehend von der dargestellten maximalen Reduzierung des der freien Grundfläche 30, nimmt diese in beide Umfangsrichtungen wieder zu, indem bei gleichbleibendem Profil 33 eine stetige Zunahme der freien Grundfläche 30 erfolgt - schraffierte Fläche reduziert sich ausgehend von der dargestellten maximalen Fläche.

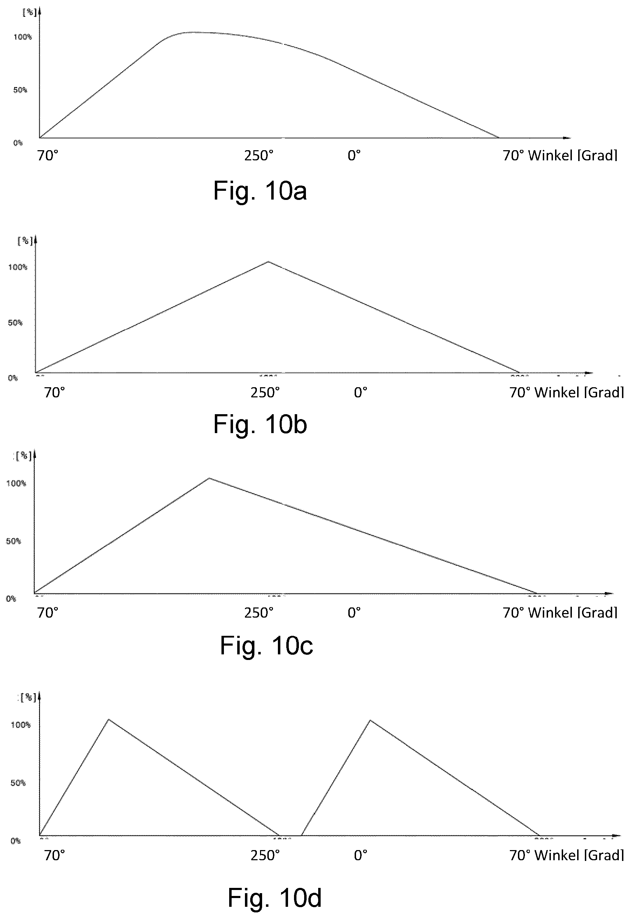

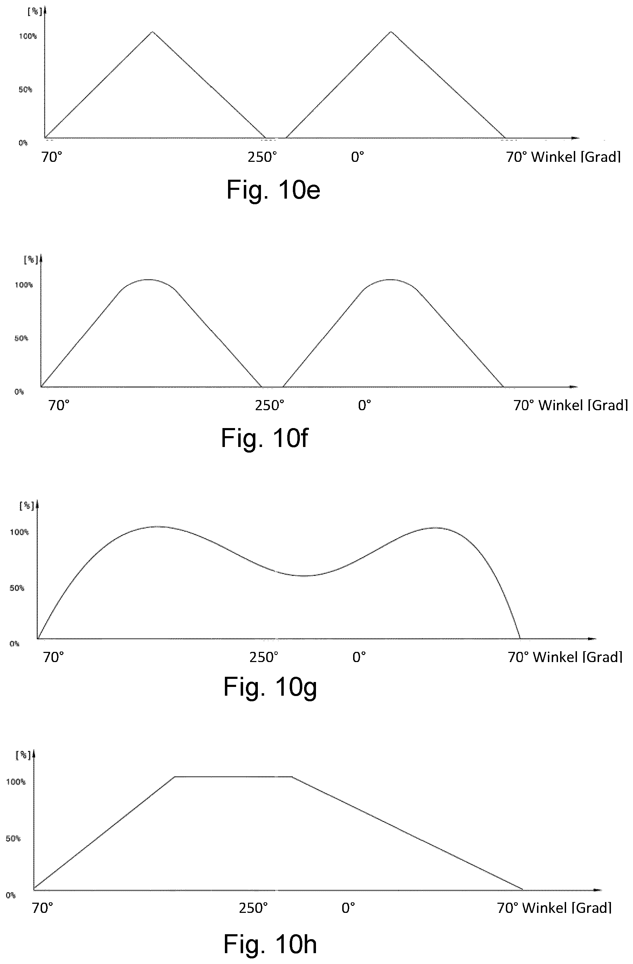

Fig. 10a bis Fig. 10h zeigen Ausführungsbeispiele des Verlaufs des Füllquerschnitts 29 in Prozent - auf der Ordinatenachse -. Der Wert von 100% ist bei allen Ausführungsbeispielen der Fig. 9b bis 9g dargestellt; ausgehend von diesem maximalen Wert erfolgt der in den Fig. 10a bis Fig. 10h dargestellte Verlauf über den Umfang. Auf der Abszissenachse ist der Umfang anhand des Winkels in einem Koordinatensystem gemäß Fig. 7 dargestellt. Die Ausführungsbeispiele der Fig. 10d, 10e und 10f zeigen Ausführungsbeispiele mit mindestens zwei zweiten Bogensegmenten 28 mit einem variierenden Füllquerschnitt 29, der zumindest lokal auf dem Umfang eines der Profile der Fig. 9b bis Fig. 9g aufweist, nämlich an den dargestellten Maxima. Die Ausführungsbeispiele der Fig. 10a, 10b, 10c, 10g und 10h zeigen Ausführungsbeispiele bei denen sich das zweite Bogensegment, 28 mit dem Füllquerschnitt 29 nahezu vollständig über den gesamten Umfang erstreckt.

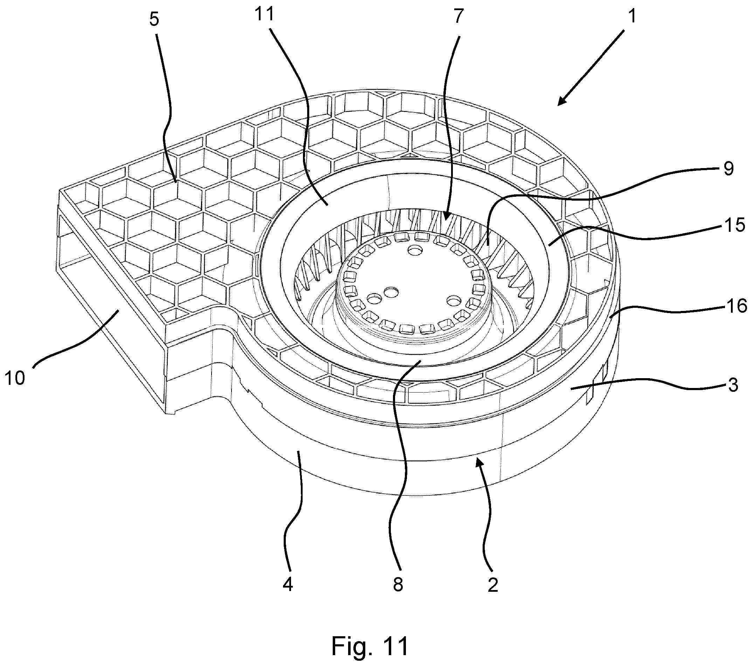

Fig. 11 zeigt ein Ausführungsbeispiel eines Gehäuses 1 für einen dargestellten Radiallüfter 2. Die Einlassfläche 11 weist wie bei dem Ausführungsbeispiel gemäß Fig. 1 über den gesamten Umfang der Einlassöffnung 7 im Querschnitt eine Form auf, die der Form der Fibonacci-Spirale entspricht, insbesondere mit drei unterschiedlichen Radien. Die Einlassfläche 11 erstreckt sich zumindest teilweise auf einer Aufwölbung 15, die die Einlassöffnung 7 umgibt. Auf der Außenseite 17 des Gehäuseteils 3 ist die Aufwölbung 15 von einer wabenförmigen Stützstruktur 5 umgeben, deren Höhe der Höhe 14 - siehe Fig. 2 - der Aufwölbung 15 entspricht. Die Stützstruktur 5 ist einstückig mit dem Gehäuseteil 3 ausgebildet und dient insbesondere der Stabilisierung des Gehäuseteils 3. Die Stützstruktur erstreckt sich bei diesem Ausführungsbeispiel über die gesamte Fläche der Außenseite 16.

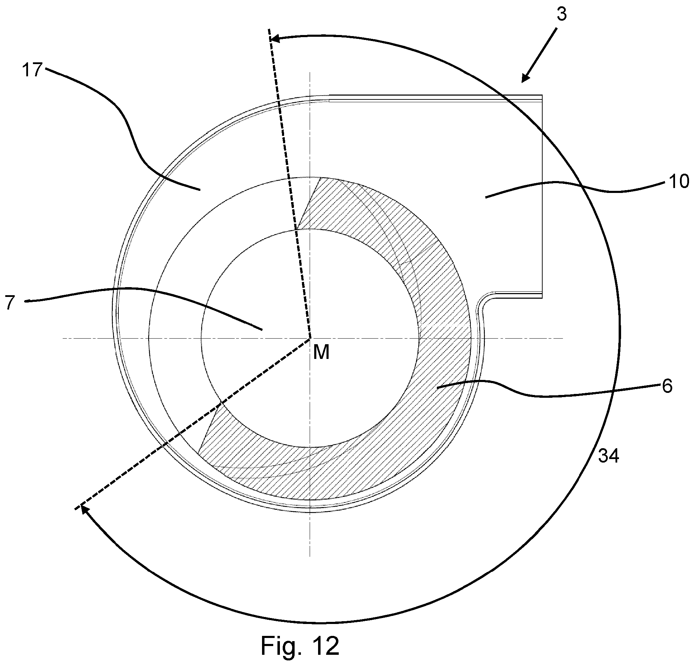

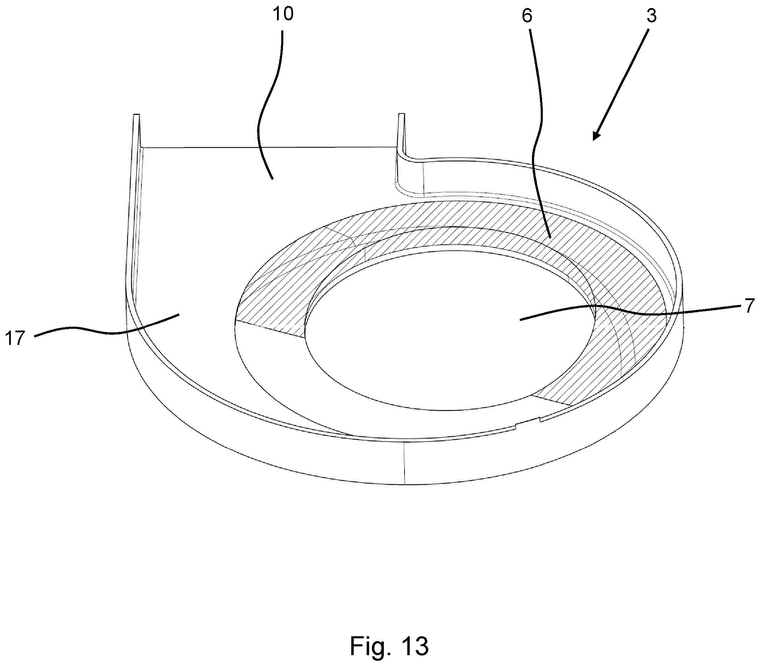

Fig. 12 und Fig. 13 zeigen ein Ausführungsbeispiel eines Gehäuseteils 3 von der Innenseite 17. Die Einlassöffnung 7 ist entlang ihres Umfangs teilweise von einem Umlaufvorsprung 6 umgeben, der sich über ein Vorsprungsbogensegment 34 erstreckt, dass einen Mittelpunktswinkel von etwa 250° überstreicht - siehe Fig. 12. In einem Koordinatensystem gemäß der Fig. 7 ist das Vorsprungsbogensegment 34 etwa in einem Winkelbereich zwischen 135° und 25° angeordnet. Der Umlaufvorsprung 6 ist nur aus Gründen der Anschaulichkeit schraffiert dargestellt. Bei diesem Ausführungsbeispiel ist der Umlaufvorsprung 6 einstückig mit dem Gehäuseteil 3 ausgebildet. Der Umlaufvorsprung 6 ist im Montagezustand im Wesentlichen im Druckbereich eines Radiallüfters 2 angeordnet, wodurch die Leistungseigenschaften vorteilhaft beeinflusst werden.

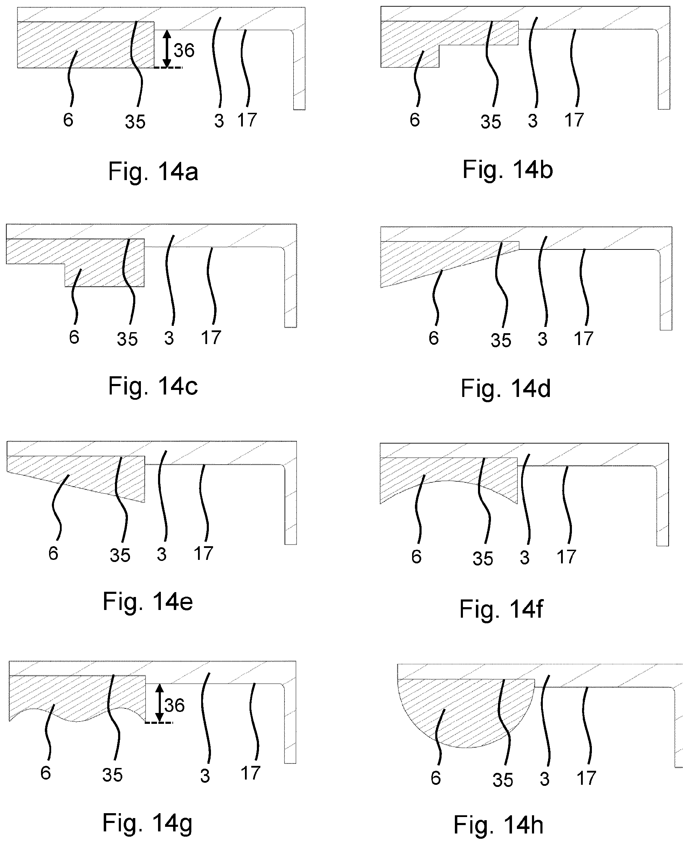

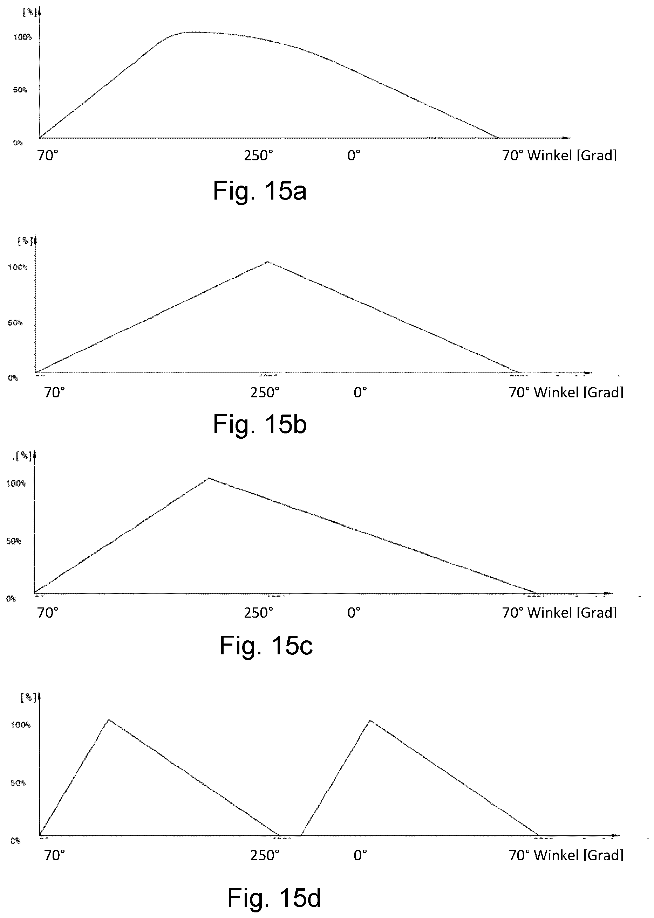

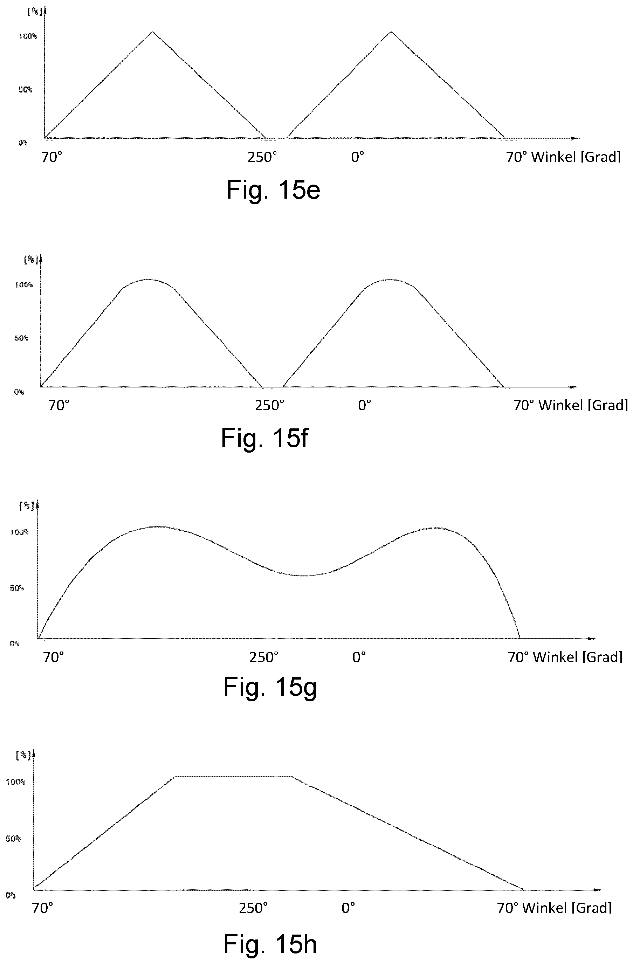

Fig. 14a bis 14h zeigen Ausführungsbeispiele von Umlaufvorsprüngen 6 im Querschnitt, nämlich an einer Stelle mit der maximalen Fläche des Umlaufvorsprungs im Querschnitt. Ausgehend von den in den Fig. 14a bis Fig. 14h dargestellten Flächen reduziert sich die Fläche des Umlaufvorsprungs 6 im Querschnitt stetig oder weist einen Verlauf auf, der in den Fig. 15a bis 15h dargestellt ist. Dabei sind die in Fig. 14a bis Fig. 14h dargestellten Schnitte an den absoluten Maximal der Fig. 15a bis Fig. 15h. Die Winkelangaben der Fig. 15a bis Fig. 15h beziehen sich auf ein Koordinatensystem gemäß Fig. 7.

Bei den Ausführungsbeispielen der Fig. 14a bis Fig. 14h ist der Umlaufvorsprung 6 als separates Teil ausgebildet und in eine Ausnehmung 35 in dem Gehäuseteil 3 eingesetzt und befestigt. Die dargestellten Umlaufvorsprünge 6 weisen einen polygonalen und/oder zumindest teilweise gewölbten Querschnitt auf. Eine maximale Höhe 36, beispielhaft in Fig. 14a und 14g dargestellt, des Umlaufvorsprungs 6 ist vorzugsweise so gewählt, dass ein Spalt zwischen einem Lüfterrad 9 und der maximalen Höhe 36 zwischen 1 mm und 5 mm beträgt.

## Patentansprüche

1. Gehäuse (1) für eine Strömungsmaschine, insbesondere für einen Radiallüfter (2), mit mindestens einem Gehäuseteil (3), wobei das Gehäuseteil (3) mindestens eine Einlassöffnung (7) aufweist, wobei mit dem Gehäuseteil (3) ein Fluidraum (8) zur Aufnahme mindestens eines Lüfterrades (9) zumindest teilweise begrenzbar ist, wobei die Einlassöffnung (7) auf einer Außenseite des Gehäuseteils (3) von einer Aufwölbung (15) umgeben ist, wobei sich eine gewölbte Einlassfläche (11) zumindest teilweise auf der Aufwölbung (15) erstreckt, und wobei auf einer Innenseite (17) des Gehäuseteils (3) ein die Einlassöffnung (7) zumindest teilweise umfänglich umgebender Umlaufrücksprung (25) ausgebildet ist, wobei der Umlaufrücksprung (25) in mindestens einem ersten Bogensegment (26) entlang des Umfangs einen Grundquerschnitt (27) und in mindestens einem zweiten Bogensegment (28) einen variierenden Füllquerschnitt (29) aufweist.

2. Gehäuse (1) nach Anspruch 1,
wobei der Umlaufrücksprung (25) im Grundquerschnitt (27) eine freie Grundfläche (30) aufweist, und dass die freie Grundfläche (30) im Füllquerschnitt (29) reduziert ist.

3. Gehäuse (1) nach Anspruch 1 oder 2,
wobei sich der Füllquerschnitt (29) in einem Polarkoordinatensystem, das auf der Innenseite (17) des Gehäuseteils (3) anliegt, dessen Pol (P) mit einer Mittelachse (M) der Einlassöffnung (7) zusammenfällt, und dessen Polachse (PA1) orthogonal zur Mittelachse (MA1) einer Auslassöffnung (10) ist, in einem Winkelbereich zwischen 120° und 360° erstreckt, insbesondere in einem Winkelbereich zwischen 135° und 355°.

4. Gehäuse (1) nach einem der Ansprüche 1 bis 3,
wobei der Füllquerschnitt (29) ein stetiges oder unstetiges Profil (33) aufweist, insbesondere ein lineares, bogenförmiges und/oder stufenförmiges Profil (33) aufweist.

5. Gehäuse (1) für eine Strömungsmaschine, insbesondere für einen Radiallüfter (2), mit mindestens einem Gehäuseteil (3), wobei das Gehäuseteil (3) mindestens eine Einlassöffnung (7) aufweist, wobei mit dem Gehäuseteil (3) ein Fluidraum (8) zur Aufnahme mindestens eines Lüfterrades (9) zumindest teilweise begrenzbar ist, wobei die Einlassöffnung (7) auf einer Außenseite des Gehäuseteils (3) von einer Aufwölbung (15) umgeben ist, und wobei sich eine gewölbte Einlassfläche (11) zumindest teilweise auf der Aufwölbung (15) erstreckt,
wobei auf einer Innenseite (17) des Gehäuseteils (3) ein die Einlassöffnung (7) zumindest teilweise umgebender Umlaufvorsprung (6) ausgebildet ist, und dass der Umlaufvorsprung (6) einen über seine Erstreckung variierenden Querschnitt aufweist.

6. Gehäuse (1) nach Anspruch 5,
wobei der Umlaufvorsprung (6) in mindestens einem Vorsprungsbogensegment (34) entlang des Umfangs erstreckt, insbesondere dass das Vorsprungsbogensegment (34) einen Mittelpunktswinkel zwischen 1° und 359°, insbesondere 220°, aufweist.

7. Gehäuse (1) nach Anspruch 6,
wobei sich das Vorsprungsbogensegment (34) in einem Polarkoordinatensystem, das auf der Innenseite (17) des Gehäuseteils (3) anliegt, dessen Pol (P) mit einer Mittelachse (M) der Einlassöffnung (7) zusammenfällt, und dessen Polachse (PA1) orthogonal zur Mittelachse (MA1) einer Auslassöffnung (10) ist, in einem Winkelbereich zwischen 120° und 360° erstreckt, insbesondere in einem Winkelbereich zwischen 135° und 355°.

8. Gehäuse (1) nach einem der Ansprüche 5 bis 7,
wobei der Umlaufvorsprung (6) zumindest teilweise in das Gehäuseteil (3) eingelassen ist.

9. Gehäuse (1) nach einem der Ansprüche 1 bis 8,
wobei das Gehäuseteil (3) aus einem Kunststoff ausgebildet ist, insbesondere dass das Gehäuseteil (3) einstückig, bevorzugt mittels Spritzgießen oder einem additiven Herstellungsverfahren, insbesondere 3D-Druck, ausgebildet ist.

10. Gehäuse (1) nach einem der Ansprüche 1 bis 9,
wobei die Einlassöffnung (7) zumindest abschnittsweise eine gewölbte Einlassfläche (11) aufweist, und dass die gewölbte Einlassfläche (11) im Querschnitt zumindest teilweise die Form einer logarithmischen Spirale aufweist.

11. Gehäuse (1) nach einem der Ansprüche 1 bis 10,
wobei die Einlassöffnung (7) zumindest abschnittsweise eine gewölbte Einlassfläche (11) aufweist, und dass sich mindestens ein Leitelement (21) ausgehend von der Einlassfläche (11) in Richtung einer Mittelachse der Einlassöffnung (7) erstreckt, insbesondere dass mehr als ein Leitelement (21), insbesondere zwischen zwei und zehn Leitelemente (21), vorgesehen sind, bevorzugt dass zumindest ein Teil der Leitelemente (21) auf dem Umfang der Einlassfläche (11) mit sich zueinander nach der Fibonacci-Folge verhaltenden Abständen (A1, A2, A3, A4, A5) beabstandet sind.

12. Gehäuse (1) nach einem der Ansprüche 5 bis 8,
wobei auf einer Innenseite (17) des Gehäuseteils (3) ein die Einlassöffnung (7) zumindest teilweise umfänglich umgebender Umlaufrücksprung (25) ausgebildet ist, insbesondere **gekennzeichnet durch** den Kennzeichnungsteil mindestens eines Anspruchs der Ansprüche 2 bis 4.

13. Gehäuse (1) nach einem der Ansprüche 1 bis 4,
wobei auf einer Innenseite (17) des Gehäuseteils (3) ein die Einlassöffnung (7) zumindest teilweise umfänglich umgebender Umlaufvorsprung (6) ausgebildet ist, insbesondere **gekennzeichnet durch** den Kennzeichnungsteil mindestens eines Anspruchs der Ansprüche 5 bis 8.

14. Strömungsmaschine, insbesondere Radiallüfter (2), mit mindestens einem Lüfterrad (9), wobei das Lüfterrad (9) von einem Antriebsmittel antreibbar ist, und wobei das Lüfterrad (9) rotierbar in einem Fluidraum (9) eines Gehäuses (1) angeordnet ist,
wobei das Gehäuse (1) nach einem der Ansprüche 1 bis 13 ausgebildet ist.

15. Belüfteter Fahrzeugsitz mit mindestens einem Radiallüfter (2),
wobei der Radiallüfter (2) gemäß Anspruch 14 ausgebildet ist.

**Claims**

1. A housing (1) for a turbomachine, in particular for a radial fan (2), having at least one housing part (3), wherein the housing part (3) has at least one inlet opening (7), wherein a fluid space (8) for receiving at least one fan wheel (9) is at least partially delimited by the housing part (3), wherein the inlet opening (7) is surrounded on an outer side of the housing part (3) by a bulge (15), wherein a curved inlet surface (11) extends at least partially on the bulge (15), and wherein

   a circumferential recess (25) at least partially circumferentially surrounding the inlet opening (7) is formed on an inner side (17) of the housing part (3),
   wherein the circumferential recess (25) has a base cross-section (27) along the circumference in at least one first arc segment (26) and a varying fill cross-section (29) in at least one second arc segment (28).

2. The housing (1) according to claim 1,
wherein the circumferential recess (25) has a free base area (30) in the base cross-section (27), and wherein the free base area (30) is reduced in the fill cross-section (29).

3. The housing (1) according to claim 1 or 2,
wherein the fill cross-section (29) extends in an angular range between 120° and 360°, in particular in an angular range between 135° and 355°, in a polar coordinate system that lies on the inner side (17) of the housing part (3), whose pole (P) coincides with a central axis (M) of the inlet opening (7), and whose polar axis (PA1) is orthogonal to the central axis (MA1) of an outlet opening (10).

4. The housing (1) according to any one of claims 1 to 3, wherein the fill cross-section (29) has a continuous or discontinuous profile (33), in particular has a linear, arcuate and/or stepped profile (33).

5. A housing (1) for a turbomachine, in particular for a radial fan (2), having at least one housing part (3), wherein the housing part (3) has at least one inlet opening (7), wherein a fluid space (8) for receiving at least one fan wheel (9) is at least partially delimited by the housing part (3), wherein the inlet opening (7) is surrounded on an outer side of the housing part (3) by a bulge (15), and wherein a curved inlet surface (11) extends at least partially on the bulge (15), wherein a circumferential projection (6) at least partially surrounding the inlet opening (7) is formed on an inner side (17) of the housing part (3), and wherein the circumferential projection (6) has a cross-section that varies over its extent.

6. The housing (1) according to claim 5,
wherein the circumferential projection (6) extends in at least one projection arc segment (34) along the circumference, in particular wherein the projection arc segment (34) has a central angle between 1° and 359°, in particular 220°.

7. The housing (1) according to claim 6,
wherein the projection arc segment (34) extends in an angular range between 120° and 360°, in particular in an angular range between 135° and 355°, in a polar coordinate system that lies on the inner side (17) of the housing part (3), whose pole (P) coincides with a central axis (M) of the inlet opening (7), and whose polar axis (PA1) is orthogonal to the central axis (MA1) of an outlet opening (10).

8. The housing (1) according to any one of claims 5 to 7, wherein the circumferential projection (6) is at least partially recessed into the housing part (3).

9. The housing (1) according to any one of claims 1 to 8, wherein the housing part (3) is formed from a plastic, in particular wherein the housing part (3) is formed in one piece, preferably by means of injection molding or an additive manufacturing process, in particular 3D printing.

10. The housing (1) according to any one of claims 1 to 9, wherein the inlet opening (7) has at least in sections a curved inlet surface (11), and wherein the curved inlet surface (11) has at least partially the shape of a logarithmic spiral in cross-section.

11. The housing (1) according to any one of claims 1 to 10,
wherein the inlet opening (7) has at least in sections a curved inlet surface (11), and wherein at least one guide element (21) extends from the inlet surface (11) in the direction of a central axis of the inlet opening (7), in particular wherein more than one guide element (21), in particular between two and ten guide elements (21), are provided, preferably wherein at least a portion of the guide elements (21) are spaced apart on the circumference of the inlet surface (11) with spacings (A1, A2, A3, A4, A5) that relate to one another according to the Fibonacci sequence.

**12.** The housing (1) according to any one of claims 5 to 8, wherein a circumferential recess (25) at least partially circumferentially surrounding the inlet opening (7) is formed on an inner side (17) of the housing part (3), in particular **characterized by** the characterizing portion of at least one of claims 2 to 4.

**13.** The housing (1) according to any one of claims 1 to 4, wherein a circumferential projection (6) at least partially circumferentially surrounding the inlet opening (7) is formed on an inner side (17) of the housing part (3), in particular **characterized by** the characterizing portion of at least one of claims 5 to 8.

**14.** A turbomachine, in particular a radial fan (2), having at least one fan wheel (9), wherein the fan wheel (9) is drivable by a drive means, and wherein the fan wheel (9) is rotatably arranged in a fluid space (9) of a housing (1),
wherein the housing (1) is configured according to any one of claims 1 to 13.

**15.** A ventilated vehicle seat having at least one radial fan (2),
wherein the radial fan (2) is configured according to claim 14.

**Revendications**

**1.** Carter (1) pour une turbomachine, en particulier pour un ventilateur radial (2), comprenant au moins une partie de carter (3), la partie de carter (3) présentant au moins une ouverture d'entrée (7), un espace de fluide (8) destiné à recevoir au moins une roue de ventilateur (9) pouvant être au moins partiellement délimité par la partie de carter (3), l'ouverture d'entrée (7) étant entourée sur un côté extérieur de la partie de carter (3) par un bombement (15), une surface d'entrée bombée (11) s'étendant au moins partiellement sur le bombement (15), et

un retrait périphérique (25) entourant au moins partiellement l'ouverture d'entrée (7) sur sa circonférence étant formé sur un côté intérieur (17) de la partie de carter (3),
le retrait périphérique (25) présentant dans au moins un premier segment d'arc (26) le long de la circonférence une section transversale de base (27) et dans au moins un deuxième segment d'arc (28) une section transversale de remplissage variable (29).

**2.** Carter (1) selon la revendication 1,
le retrait périphérique (25) présentant dans la section transversale de base (27) une surface de base libre (30), et la surface de base libre (30) étant réduite dans la section transversale de remplissage (29).

**3.** Carter (1) selon la revendication 1 ou 2,
la section transversale de remplissage (29) s'étendant dans un système de coordonnées polaires, qui est appliqué sur le côté intérieur (17) de la partie de carter (3), dont le pôle (P) coïncide avec un axe central (M) de l'ouverture d'entrée (7), et dont l'axe polaire (PA1) est orthogonal à l'axe central (MA1) d'une ouverture de sortie (10), dans une plage angulaire comprise entre 120° et 360°, en particulier dans une plage angulaire comprise entre 135° et 355°.

**4.** Carter (1) selon l'une des revendications 1 à 3,
la section transversale de remplissage (29) présentant un profil (33) continu ou discontinu, en particulier présentant un profil linéaire, arqué et/ou en forme de marches (33).

**5.** Carter (1) pour une turbomachine, en particulier pour un ventilateur radial (2), comprenant au moins une partie de carter (3), la partie de carter (3) présentant au moins une ouverture d'entrée (7), un espace de fluide (8) destiné à recevoir au moins une roue de ventilateur (9) pouvant être au moins partiellement délimité par la partie de carter (3), l'ouverture d'entrée (7) étant entourée sur un côté extérieur de la partie de carter (3) par un bombement (15), et une surface d'entrée bombée (11) s'étendant au moins partiellement sur le bombement (15),
une saillie périphérique (6) entourant au moins partiellement l'ouverture d'entrée (7) étant formée sur un côté intérieur (17) de la partie de carter (3), et la saillie périphérique (6) présentant une section transversale variable sur son étendue.

**6.** Carter (1) selon la revendication 5,
la saillie périphérique (6) s'étendant dans au moins un segment d'arc de saillie (34) le long de la circonférence, en particulier le segment d'arc de saillie (34) présentant un angle au centre compris entre 1° et 359°, en particulier 220°.

**7.** Carter (1) selon la revendication 6,
le segment d'arc de saillie (34) s'étendant dans un système de coordonnées polaires, qui est appliqué sur le côté intérieur (17) de la partie de carter (3), dont le pôle (P) coïncide avec un axe central (M) de l'ouverture d'entrée (7), et dont l'axe polaire (PA1) est orthogonal à l'axe central (MA1) d'une ouverture de sortie (10), dans une plage angulaire comprise entre 120° et 360°, en particulier dans une plage angulaire comprise entre 135° et 355°.

**8.** Carter (1) selon l'une des revendications 5 à 7,
la saillie périphérique (6) étant au moins partiellement encastrée dans la partie de carter (3).

**9.** Carter (1) selon l'une des revendications 1 à 8,

la partie de carter (3) étant réalisée en une matière plastique, en particulier la partie de carter (3) étant réalisée d'une seule pièce, de préférence au moyen d'un moulage par injection ou d'un procédé de fabrication additive, en particulier d'une impression 3D.

10. Carter (1) selon l'une des revendications 1 à 9, l'ouverture d'entrée (7) présentant au moins par sections une surface d'entrée bombée (11), et la surface d'entrée bombée (11) présentant en section transversale au moins partiellement la forme d'une spirale logarithmique.

11. Carter (1) selon l'une des revendications 1 à 10, l'ouverture d'entrée (7) présentant au moins par sections une surface d'entrée bombée (11), et au moins un élément de guidage (21) s'étendant à partir de la surface d'entrée (11) en direction d'un axe central de l'ouverture d'entrée (7), en particulier plus d'un élément de guidage (21), en particulier entre deux et dix éléments de guidage (21), étant prévus, de préférence au moins une partie des éléments de guidage (21) étant espacés sur la circonférence de la surface d'entrée (11) avec des espacements (A1, A2, A3, A4, A5) se comportant les uns par rapport aux autres selon la suite de Fibonacci.

12. Carter (1) selon l'une des revendications 5 à 8, un retrait périphérique (25) entourant au moins partiellement l'ouverture d'entrée (7) sur sa circonférence étant formé sur un côté intérieur (17) de la partie de carter (3), en particulier **caractérisé par** la partie caractérisante d'au moins une revendication parmi les revendications 2 à 4.

13. Carter (1) selon l'une des revendications 1 à 4, une saillie périphérique (6) entourant au moins partiellement l'ouverture d'entrée (7) sur sa circonférence étant formée sur un côté intérieur (17) de la partie de carter (3), en particulier **caractérisé par** la partie caractérisante d'au moins une revendication parmi les revendications 5 à 8.

14. Turbomachine, en particulier ventilateur radial (2), comprenant au moins une roue de ventilateur (9), la roue de ventilateur (9) pouvant être entraînée par un moyen d'entraînement, et la roue de ventilateur (9) étant disposée de manière rotative dans un espace de fluide (9) d'un carter (1), le carter (1) étant réalisé selon l'une des revendications 1 à 13.

15. Siège de véhicule ventilé comprenant au moins un ventilateur radial (2), le ventilateur radial (2) étant réalisé selon la revendication 14.

Fig. 1

EP 3 705 728 B1

Fig. 2

EP 3 705 728 B1

Fig. 3

Fig. 4

EP 3 705 728 B1

Fig. 5

EP 3 705 728 B1

18

Fig. 6

EP 3 705 728 B1

Fig. 7

EP 3 705 728 B1

Fig. 8

EP 3 705 728 B1

11  32  27,30  25  16  3

GH

12  31

Fig. 9a

33  3

29

Fig. 9d

33  29  3

Fig. 9b

33  29  3

Fig. 9e

29  3

33  Fig. 9c

33  29  3

Fig. 9f

33  3

29

Fig. 9g

Fig. 10a

Fig. 10b

Fig. 10c

Fig. 10d

Fig. 10e

Fig. 10f

Fig. 10g

Fig. 10h

EP 3 705 728 B1

Fig. 11

Fig. 12

Fig. 13

Fig. 14a

Fig. 14b

Fig. 14c

Fig. 14d

Fig. 14e

Fig. 14f

Fig. 14g

Fig. 14h

Fig. 15a

Fig. 15b

Fig. 15c

Fig. 15d

Fig. 15e

Fig. 15f

Fig. 15g

Fig. 15h

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010209888 A
- JP 2013057298 A
- JP 2009041517 A
- US 6030286 A